# EUROPEAN PATENT APPLICATION

(11) **EP 1 791 206 A1**
(43) Date of publication of application: **30.05.2007**
(21) Application number: 05767195.0
(22) Date of filing: 22.07.2005
(51) Int. Cl.: H01M 8/04

(54) **COOLANT COMPOSITION, COOLING SYSTEM AND PROCESS FOR PRODUCING COOLANT COMPOSITION**

(30) Priority: 23.07.2004 JP 2004215420; 22.07.2005 JP 2005212563
(71) Applicant: TOYOTA JIDOSHA KABUSHIKI KAISHA, Toyota-shi, Aichi-ken 471-8571 (JP); Japan Chemical Industries Co., Ltd., Shizuoka-shi, Shizuoka 424-8558 (JP)
(72) Inventor: NISHII, Mikito c/o Toyota Jidosha Kabushiki Kaisha, Toyota-shi, Aichi 4718571 (JP); OGURA, Shinichi Japan Chemical Industries Co. Ltd, Shizuoka-shi, Shizuoka 4248558 (JP); YAEDA, Kazuhito Japan Chemical Industries Co. Ltd, Shizuoka-shi, Shizuoka 4248558 (JP); TAMI, Hideyuki Japan Chemical Industries Co. Ltd, Shizuoka-shi, Shizuoka 4248558 (JP); MOCHIZUKI, H. Japan Chemical Industries Co. Ltd, Shizuoka-shi, Shizuoka 4248558 (JP); TAKAGI, N. Japan Chemical Industries Co. Ltd, Shizuoka-shi, Shizuoka 4248558 (JP)
(74) Representative: Kuhnen & Wacker
(86) International application number: PCT/JP2005/013895
(87) International publication number: WO 2006/009323

(57) **Abstract**

When a coolant composition **characterized in that** ion exchange resin is uniformly dispersed in a water-based coolant is used as a coolant for a fuel cell stack from a viewpoint of high-voltage safety, eluted substance from parts in the cooling system is removed in the initial stages and with the passage of time, so as to stably maintain insulation properties of the coolant.

## Description

### Technical Field

The present invention relates to a coolant composition, a cooling system, and a method for producing the coolant composition. More specifically, it relates to a coolant composition that shows stable insulation properties, used for a fuel cell, particularly for a vehicle-mounted fuel cell.

### Background Art

Generally, a fuel cell stack has a stacked structure of a plurality of cells, in which cooling plates for cooling the stack (cells) are inserted between individual substacks, each substack composed of a few layers of cells. A coolant channel is formed inside the cooling plate, and the stack is cooled by the flow of coolant through the coolant channel. In this way, since such coolant for a fuel cell circulates between the stack where electric power is generated and the heat exchanger, high insulation performance is required in order to prevent electric leak to the outside of the stack and decrease in electrical efficiency caused by the resistance in the coolant (reduction of energy loss).

In order to meet such demands of ensuring insulation performance, cooling efficiency, and the like, pure water has been used as a coolant in conventional technologies. In addition to such demands, anti-rust properties are required for a fuel cell stack coolant in order to maintain a long product life of cooling plates. This requirement has been generally addressed by using a stainless-steel material with high anti-rust properties for cooling plates or by adding iron ions to the coolant, as disclosed in JP Patent Publication (Kokai) No. 2-21572 A (1990).

However, while such conventional approaches are effective for so-called fixed, stationary-type, medium-or large-size fuel cells, or constantly operating fuel cells, they are not necessarily effective for non-stationary, small fuel cells or intermittently operating fuel cells, such as fuel cells installed in vehicles.

For example, since the temperature of the coolant in intermittently operating, non-stationary fuel cells falls to ambient temperature when the cell is not in operation, anti-freezing properties are required for the coolant under conditions where the ambient temperature is the freezing point or lower. This is because, if the coolant freezes, the cooling circuit including cooling plates may be damaged. Furthermore, when the cooling circuit is damaged, possibly fuel cells do not operate sufficiently.

In this situation, taking anti-freezing properties into account, use of a coolant for cooling an internal combustion engine as a non-freezing coolant is an option. However, since such coolant for cooling an internal combustion engine is basically used in the area where no electricity is generated, low conductivity is not expected, and therefore, the coolant has extremely high electric conductivity. Meanwhile, since electricity flows through a cooling pipe of a fuel cell stack, when the coolant has a high electric conductivity, the electricity generated in the fuel cell flows into the coolant, thereby losing electricity. For this reason, such coolant is not suitable as a coolant for cooling a fuel cell stack.

Further, in the case of non-stationary fuel cells installed in vehicles or the like, reducing the weight of a fuel cell system including a cooling circuit is an important issue to be solved. Therefore, from the viewpoint of weight saving, light metals having high thermal conductivity, such as aluminum materials, are expected to be used for cooling plates, heat exchangers, and the like. Generally, the anti-rust properties of such light metals are not as high as those of stainless-steel materials, and therefore, the coolant itself is required to have anti-rust properties.

Given this, the present inventors invented a coolant containing a base composed of a mixed solution of water and glycol, and an anti-rust additive that maintains the conductivity of the coolant low and that maintains the hydrogen ion exponent of the coolant at approximately neutral, which was published as JP Patent Publication (Kokai) No. 2001-164244 A. Examples of such anti-rust additive include weak alkaline additives, weak acidic additives, and nonionic substances. Saccharides such as quercetin and nonionic surface active agent such as alkylglucoside are disclosed as nonionic substances.

Further, with the aim of reducing wasteful energy consumption as much as possible by controlling the conductivity of a primary coolant even when required electric power with respect to a fuel cell increases or decreases, JP Patent Publication (Kokai) No. 2002-100383 A discloses removing ions in the primary coolant by causing a portion of the primary coolant discharged from a heat exchanger to flow into an ion exchanger.

The coolant disclosed in JP Patent Publication (Kokai) 2001-164244 A is a fuel cell stack coolant having low conductivity, anti-rust properties, high heat transfer properties, and anti-freezing properties. However, since most of the additives are ionic, the coolant is problematic in its insulation properties. Further, the cooling system disclosed in JP Patent Publication (Kokai) No. 2002-100383 A is not necessarily effective for non-stationary, small fuel cells, such as vehicle-mounted fuel cells.

In existing fuel cell vehicles, from the viewpoint of heat transfer characteristics, a water-based coolant is adopted, and ion exchange resin or the like is mounted in a vehicle to deal with insulation properties, thereby removing ionic products based on elution from parts or degradation of the coolant. The ion exchange resin is contained in a container with a capacity of 100 to 500 cc, and the cooling water path is provided with a bypass circuit due to large pressure loss. Ionic products are removed by causing a certain amount (small amount) of coolant to flow through the portion. Further, in order to suppress an increase in conductivity due to eluted substance from parts in the initial stages, the inside of parts in the cooling system is washed with pure water before assembling the parts, and also, the coolant is caused to circulate for a certain period of time after assembling a vehicle, so as to remove the ionic products.

### DISCLOSURE OF THE INVENTION

In the system in which ion exchange resin is installed as in conventional technologies, since the ion exchange resin is disposed in a bypass circuit of a cooling water system, an increase in conductivity due to ionic products eluted from parts in the initial stages cannot be suppressed. Thus, measures, such as washing the inside of each part of the cooling system, are necessary. Furthermore, parts (pipes, containers, and the like) or space for mounting the ion exchange resin, and control of the flow rate are necessary.

The present invention has been made to solve the above problems, and an object thereof is to stably maintain insulation properties of coolant by using the present invention as a fuel cell stack coolant from the viewpoint of high-voltage safety and removing eluted substance from the cooling system parts in the initial stages and with the passage of time.

In the present invention, the above problems are solved by allowing a coolant composition itself to have a function of removing ionic eluted substance in a timely manner.

Namely, in a first aspect, the present invention is an invention of a coolant composition itself, and it is characterized in that ion exchange resin is uniformly dispersed in a water-based coolant. It is preferable that the density of the coolant is approximately the same as that of the ion exchange resin, and the ion exchange resin is miniaturized, so as to improve the dispersibility of the ion exchange resin. One or more kinds of carbides for adjusting density, such as metal powder, metal oxide powder, inorganic oxide powder, and silicon carbide, can be mixed with the coolant, in order to make the density of the coolant approximately the same as that of the ion exchange resin.

It is preferable that (1) the ion exchange resin has a heat resistance of 80 °C or higher, (2) the average particle diameter thereof is 300 µ or less, and (3) the dispersion amount thereof is 30 vol% or less. Further, use of both anion exchange resin and cation exchange resin as the ion exchange resin is effective in removing all ionic eluted substance in a timely manner.

Glycol and/or alcohol can be added to the water-based coolant for the purpose of improving anti-freezing properties. Further, nonionic surface active agent can be added to the water-based coolant, so as to improve the dispersibility of the ion exchange resin.

The above coolant is suitably used for a fuel cell. Particularly, it is suitably used for a vehicle-mounted fuel cell.

In a second aspect, the present invention is a fuel cell cooling system including a cooling circuit in which the above coolant composition and inert gas if desired are included. In this cooling system, the vehicle can be filled with the coolant in which the above ion exchange resin is dispersed in advance, and ions eluted from parts in the cooling system in the initial stages can be removed in a timely manner by the ion exchange resin dispersed in the coolant. Further, high insulation properties can be obtained in this cooling system. Also, it is possible to prevent deterioration in quality of the coolant composition in the cooling circuit over a long period of time. By performing deoxygenation treatment in which inert gas such as nitrogen (N₂) is injected, dissolved oxygen in the coolant composition decreases, thereby suppressing corrosion of aluminum material and maintaining insulation properties for long periods of time. Thus, by subjecting the coolant composition to deoxygenation treatment using nitrogen gas or the like, aluminum material used as material for forming the coolant circuit can be prevented from corrosion.

In a third aspect, the present invention is a fuel cell cooling system including a cooling circuit in which the above coolant composition and inert gas if desired are included, and an ion exchange resin container as a bypass circuit of the above cooling circuit. This means that the coolant composition of the present invention is used in a conventional fuel cell cooling system including such ion exchange resin container as a bypass circuit of the cooling circuit. The ion exchange resin container referred to in the present invention is a container that has an inlet port and an outlet port for the coolant and that has a cylindrical shape or the like. The inside of the container is filled with pellet-type ion exchange resin. Alternatively, an ion exchange resin film is disposed in the inside of the container, for example.

Since the ion exchange resin container is provided as a bypass circuit of the cooling circuit, (1) the vehicle is filled with the coolant in which the above ion exchange resin is dispersed in advance, (2) ions eluted from parts in the cooling system in the initial stages are removed in a timely manner by the ion exchange resin dispersed in the coolant, (3) the ion exchange resin dispersed in liquid is collected by the filter effect of the vehicle-mounted ion exchange resin in the bypass circuit of the cooling system, and (4) degraded substance or eluted substance gradually generated or eluted with the passage of time is removed by the vehicle-mounted ion exchange resin.

In a fourth aspect, the present invention is an invention of a method for producing the above coolant composition, and it is characterized in that a water-based coolant is adjusted so that ion exchange resin is dispersed in the above coolant. It is possible to improve the dispersibility of the ion exchange resin by making the density of the coolant and that of the ion exchange resin approximately the same. Specifically, this can be achieved by mixing one or more kinds of carbides for adjusting density, such as metal powder, metal oxide powder, inorganic oxide powder, and silicon carbide, with the coolant, or by selecting ion exchange resin having a density approximately the same as that of the coolant.

In a fifth aspect, the present invention is an invention of a method for storing a coolant composition, and it is characterized in that ion exchange resin is allowed to coexist in a water-based coolant. The present invention is a preservation method by which an increase in conductivity due to decomposition of ethylene glycol or the like is suppressed by allowing the coolant composition to coexist with the ion exchange resin in advance.

In the present invention, in terms of handling, it is preferable that the ion exchange resin is allowed to coexist in the water-based coolant in a state in which the ion exchange resin is contained in a meshed or fabric package, instead of dispersing it in the base.

Preferably, the water-based coolant to which the present invention is applied contains 0 to 70 wt% of glycol and 0 to 60 wt% of alcohol with respect to water.

In a sixth aspect, the present invention is an invention of an apparatus for collecting, exchanging, and reproducing the above coolant composition in which the ion exchange resin is dispersed in the water-based coolant with respect to a fuel cell body. The apparatus for collecting, exchanging, and reproducing a coolant composition includes a filter for separating collected coolant into a base and ion exchange resin, a filling tank for storing the separated base, a pure water tank for collecting the separated ion exchange resin and separating it into anion exchange resin and cation exchange resin based on the difference in specific gravity, a processing bath for chemically reproducing the separated anion exchange resin and cation exchange resin, a means of injecting the reproduced ion exchange resin into the filling tank and agitating it therein, and a pump for filling the fuel cell body with the reproduced coolant composition.

The fuel cell body as used herein constitutes a fuel cell vehicle, and it is preferable that the apparatus of the present invention for collecting, exchanging, and reproducing a coolant composition is installed at a fuel supply station for fuel cells.

By uniformly dispersing ion exchange resin in a water-based coolant, the coolant composition itself is allowed to have the function of removing ionic eluted substance in a timely manner. Thus, when the coolant composition of the present invention is used for a fuel cell stack, eluted substance from parts in the cooling system in the initial stages and with the passage of time is removed, whereby the insulation properties of the coolant can be stably maintained and an expected purpose of obtaining high-voltage safety can be accomplished.

Further, by allowing the ion exchange resin to coexist in ethylene glycol aqueous solution, the insulation properties of the coolant in a fuel cell system can be improved during a storage period, whereby an increase in conductivity during the storage period can be suppressed.

### BRIEF DESCRIPTION OF THE DRAWINGS

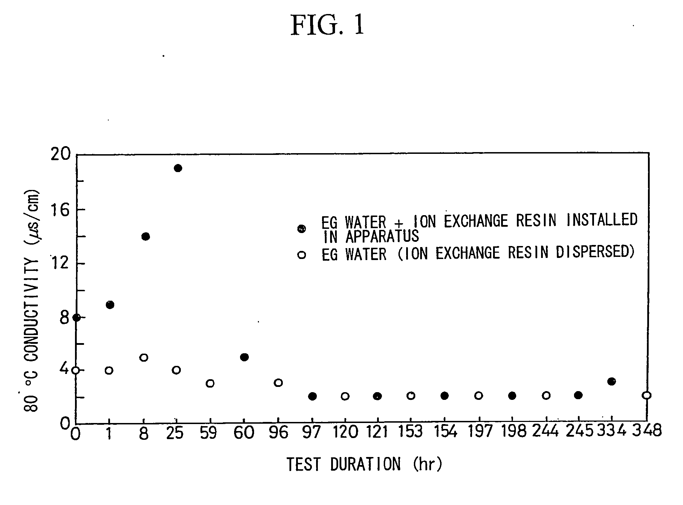

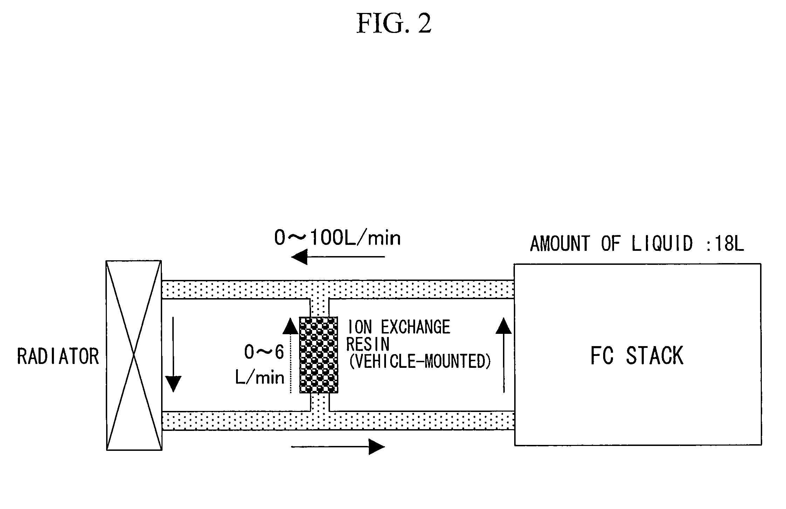

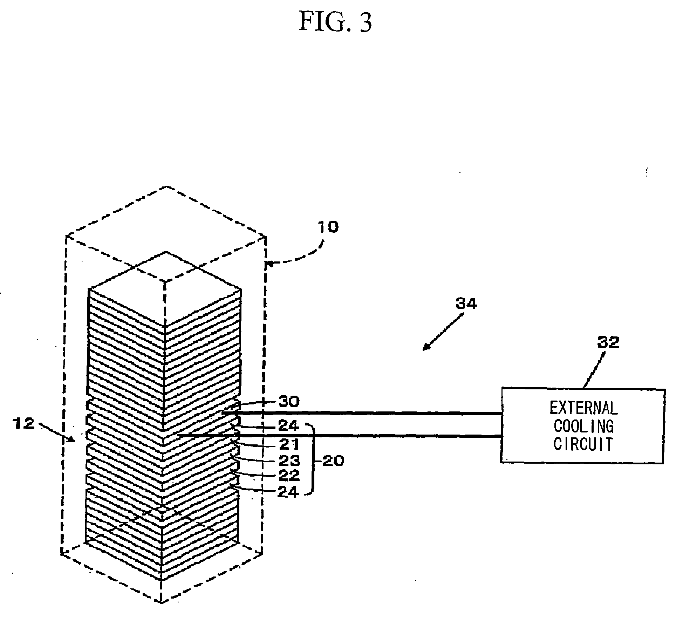

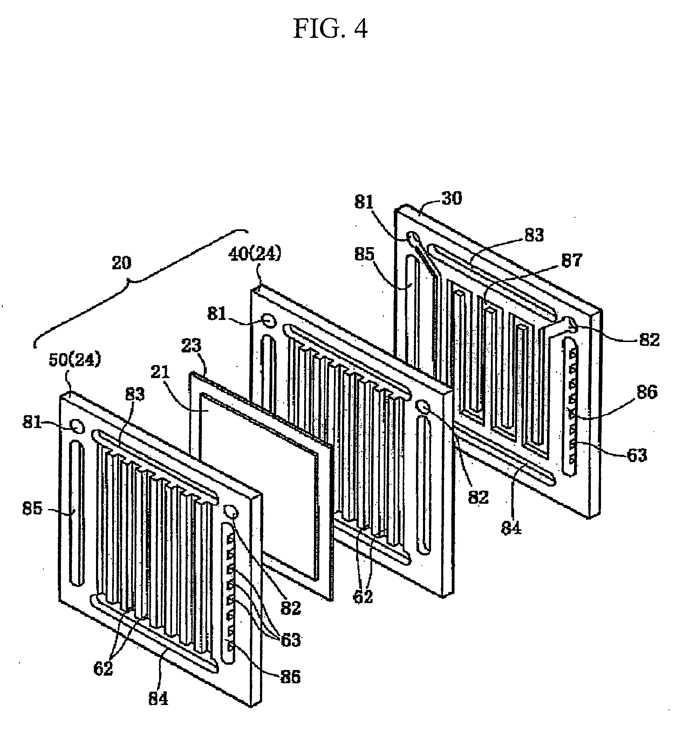

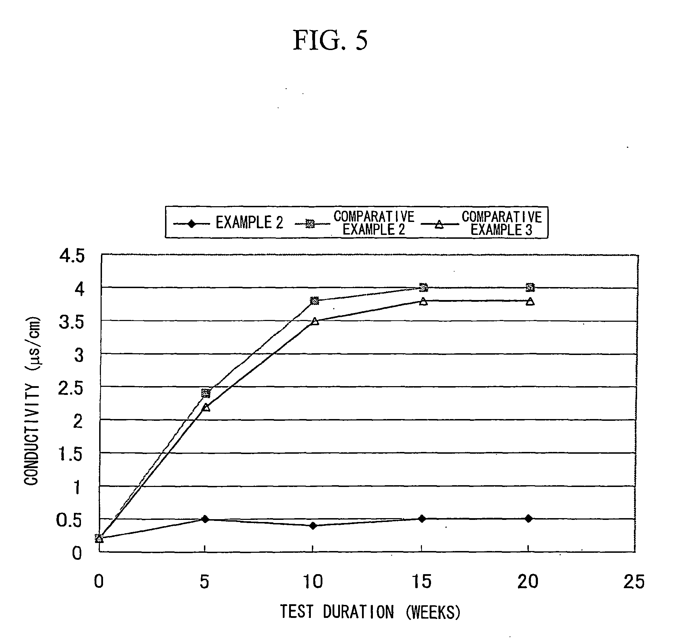

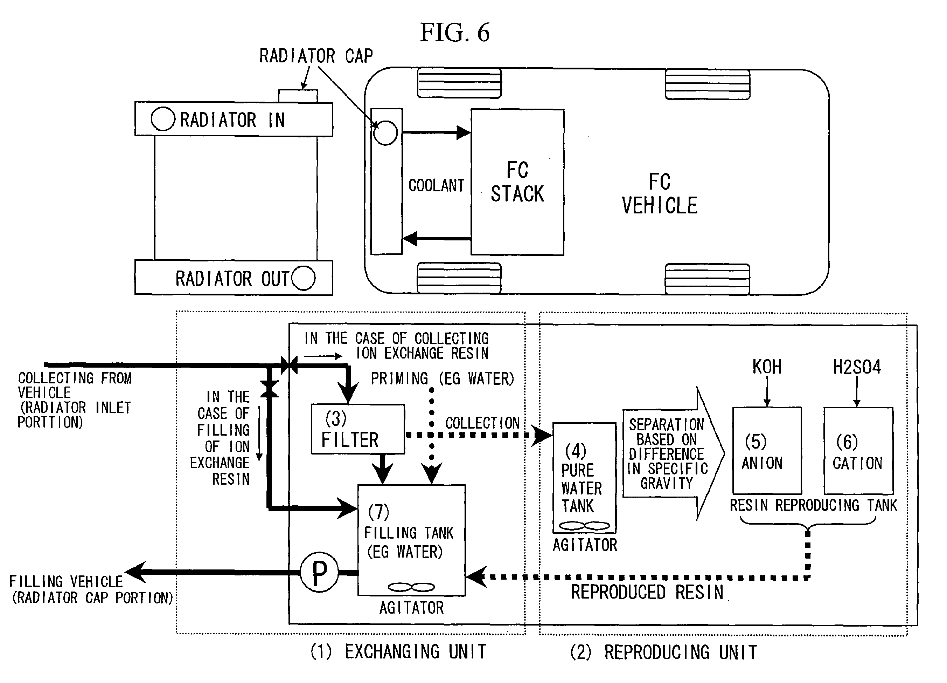

Fig. 1 shows the relationship between test duration and conductivity of coolants. Fig. 2 shows a fuel cell cooling system including an ion exchange resin container as a bypass circuit of a cooling circuit. Fig. 3 shows a schematic diagram of a fuel cell stack cooling system to which an example of the present invention can be applied. Fig. 4 shows an exploded perspective view of a stacked structure of a cell 20. Fig. 5 shows variations over time in conductivity of coolants having various compositions. Fig. 6 shows an apparatus of the present invention for collecting, exchanging, and reproducing a coolant composition for a fuel cell, in the case of a fuel-cell vehicle.

### BEST MODES FOR CARRYING OUT THE INVENTION

A coolant composition of the present invention will be hereafter described with reference to examples and comparative examples.

### [Example 1]

Ion exchange resin was added to ethylene glycol (EG) 50% aqueous solution and it was then dispersed (example 1). On the other hand, instead of dispersing the ion exchange resin in ethylene glycol (EG) 50% aqueous solution, a test equipment was equipped with the ion exchange resin in a bypass circuit (comparative example 1). The ion exchange resin used in comparative example 1 was as follows: the cell size; φ50 × 200, the flow rate; 40 ml/min, the amount of ion exchange resin; 330 ml, and the arrangement of ion exchange resin; lying position (simulation using an actual vehicle).

Table 1 shows several properties of the coolant compositions in example 1 and comparative example 1.

**Table 1**

| | Example 1 | Comparative Example 1 |
|---|---|---|
| Base | ethylene glycol 50% aqueous solution | |
| Dispersed substance | ion exchange resin | None |
| Concentration of dispersed substance (vol %) | 3 | - |
| Conductivity (µS/cm) | Shown in Fig. 1 | |
| Thermal conductivity (W/m.K) | 0.42 | 0.42 |
| Specific heat (kJ/kg·K) | 3.6 | 3.6 |
| Freezing temperature (°C) | -35 | -35 |

A circulation bench test simulating a cooling system was conducted using the coolant compositions of example 1 and comparative example 1. Taking into account that aluminum and aluminum alloy are used as materials for cooling plates, a heat exchanger in a cooling circuit, and the like, when a fuel cell is mounted in a vehicle, particularly, aluminum materials were used in the example and comparative example in the present invention. Test conditions of the evaluation equipment are as follows:
LLC: EG 50% ion exchange water
Amount of liquid: 10 liters
Temperature of the whole liquid: 90 °C (practically, the maximum temperature was approximately 86 °C)
Temperature of liquid at the radiator outlet: 85 °C
Total flow rate: 15 liters/min.
Heating time: 14 hours
Air cooling time: 24 hours

Fig. 1 shows results of the circulation bench test simulating the cooling system, as the relationship between test duration and conductivity.

The results in Fig. 1 show that ionic eluted substance was not sufficiently captured in comparative example 1 in which the ion exchange resin was simply provided, and therefore an increase in conductivity was observed. On the other hand, the conductivity was maintained at low levels over a long period of time from the beginning in example 1 of the present invention in which the ion exchange resin was dispersed.

Fig. 2 shows a fuel cell cooling system including a cooling circuit in which the above coolant composition and inert gas if desired are included, and an ion exchange resin container as a bypass circuit of the cooling circuit, as an example of the present invention. In the example of Fig. 2, the amount of liquid in the stack is 18 liters, and 0 to 100 liters of coolant circulates per minute between the stack and the radiator as a heat exchanger. Since the vehicle is filled with the coolant in which the above-mentioned ion exchange resin is dispersed in advance, ions eluted from parts in the cooling system in the initial stages are removed by the ion exchange resin dispersed in the coolant in a timely manner. The present cooling system is provided with the ion exchange resin container as a bypass circuit of the cooling circuit, and approximately 0 to 6 liters of coolant passes through the ion exchange resin container per minute. The ion exchange resin dispersed in the liquid can be collected through the filter effect of the vehicle-mounted ion exchange resin in the bypass circuit of the cooling system, and degraded substance or eluted substance gradually generated or eluted with the passage of time can be almost completely removed by the vehicle-mounted ion exchange resin.

A fuel cell stack cooling system including the above coolant composition as a refrigerant will be hereafter described with reference to Figs. 3 and 4. Fig. 3 shows a schematic diagram of a fuel cell stack cooling system to which an example of the present invention can be applied. Fig. 4 shows an exploded perspective view of a stacked structure of a cell 20.

Referring to Fig 3, a stack 12 of a fuel cell 10 includes a plurality of cells 20 stacked in layers. Each of the cells 20 has an air electrode 21, a fuel electrode 22, a matrix (electrolyte) 23 sandwiched between the air electrode 21 and the fuel electrode 22, and separators 24 made of compact carbon disposed on the outer side of the fuel electrode 22 and the air electrode 21. A cooling separator 30 made of aluminum is disposed on the separator 24 every few stacks of cells 20.

In the present example, the separator 24 is provided either as an end separator 40 or as a central separator 50. Each of the cooling separator 30, and these separators 40 and 50 has a shape of a plate whose surface to be stacked is square. Each of the cooling separator 30, the end separator 40, and the central separator 50 is provided with coolant holes 81 and 82 having circular cross-sections formed in two portions (upper corners in Fig. 4) of the peripheral part thereof. The coolant holes 81 and 82 form a channel for a coolant running through the stack in the stacked direction when the stack is formed. A pair of long, thin fuel gas holes 83 and 84 and a pair of oxidation gas holes 85 and 86 are formed near the edge of each side of the surface to be stacked of each of the above three separators along each side. When the stack is formed, the fuel gas holes 83 and 84 form a channel for fuel gas containing hydrogen, and the oxidation gas holes 85 and 86 form a channel for oxidation gas containing oxygen, the channels running through the stack in the stacked direction.

The cooling separator 30 is connected to an external cooling circuit 32 via a coolant path to form a cooling circuit 34 including the cooling separator 30. A plurality of parallel, groove-shaped ribs 63 communicating between the opposing oxidation gas holes 85 and 86 are formed on one side of the cooling separator 30 (on the rear side in Fig. 4). When the stack is formed, oxidation gas channels are formed between the ribs 63 and the adjacent air electrode 21. Further, a winding groove 87 communicating between the above-described coolant holes 81 and 82 is formed on the other side of the cooling separator 30 (on the front side in Fig. 4). When the stack is formed, the cooling separator 30 comes next to the end separator 40, and then, a channel for a coolant is formed between the groove 87 and the flat surface of the end separator 40.

A plurality of parallel, groove-shaped ribs 62 communicating between the opposing fuel gas holes 83 and 84 are formed on one side of the end separator 40 (on the front side in Fig. 4). When the stack is formed, fuel gas channels are formed between the ribs 62 and the adjacent fuel electrode 22. The other side of the end separator 40 (on the rear side in Fig. 4) is a flat surface without a groove structure.

A plurality of parallel, groove-shaped ribs 62 communicating between the opposing fuel gas holes 83 and 84 are formed on one side of the central separator 50 (on the front side in Fig. 4). When the stack is formed, fuel gas channels are formed between the ribs 62 and the adjacent fuel electrode 22. A plurality of groove-shaped ribs 63 communicating between the opposing oxidation gas holes 85 and 86 and perpendicular to the ribs 62 are formed on the other side of the central separator 50 (on the rear side in Fig. 4). When the stack is formed, oxidation gas channels are formed between the ribs 63 and the adjacent air electrode 21.

While the above-described separators 24 (40 and 50) are formed of compact carbon, the separators may be formed of another material having conductivity. For example, from the viewpoint of rigidity and heat transfer properties, the separators may be formed of metal, such as copper alloy or aluminum alloy.

The above coolant composition is used as the coolant in the cooling circuit. When the coolant composition is included in the cooling circuit 34, inert gas, e.g., nitrogen gas is included therein together. Therefore, dissolved oxygen in the air and the coolant composition in the cooling circuit 34 is replaced with nitrogen gas, and thus deterioration of the coolant composition caused by dissolved oxygen can be prevented.

The schematic diagrams of the fuel cell stack cooling system shown in Figs. 3 and 4 are examples, and the cooling system is not limited thereto as long as the cooling system includes the inventive coolant composition included with inert gas, as a refrigerant of the cooling circuit.

Further, in the above example, particularly an aluminum material was used for the cooling circuit including the cooling plates. However, use of another material for the cooling circuit is not excluded.

### [Example 2]

Coolants having the composition shown in Table 2 below were left to stand in airtight containers in a constant-temperature bath at 30°C. The conductivity was measured at 5-week intervals.

**Table 2**

| | | Example 2 | Comparative Example 2 | Comparative Example 3 |
|---|---|---|---|---|
| Composition vol.% | ethylene glycol | 50 | 50 | 50 |
| | ion-exchange water | 50 | 50 | 50 |
| Treatment | | Ion exchange resin (DIAION SMT 1200) was introduced into a polyester non-woven bag (coating weight: 25 g/m²) so that the resin would not come outside. The amount inputted was 80 g for 18 L. | - | 500 ml was allowed to pass through 2.22 g of ion exchange resin (SMT1200) (a cylinder with a capacity of 3.14 cm³, a diameter of 3 cm, and a height of 0.4 cm). = corresponding to example 2 (80 g for 18 L) |

Fig. 5 shows variations over time in the conductivities of the coolants having the composition of Table 2. The results of Fig. 5 show that the conductivity was increased over time in the case of comparative example 2 in which the ion exchange resin was not allowed to coexist. Also, in the case of comparative example 3 in which the resin in an amount equal to that of the coexisted ion exchange resin was allowed to pass, the conductivity-rise inhibiting effect was insufficient. In contrast, in example 2 of the present invention, the conductivity was suppressed for 20 weeks by allowing the ion exchange resin to coexist.

Regarding the cause of such increase in conductivity in a state of storage, it is known that a mixed solution comprised of ethylene glycol and ion-exchange water deteriorates by oxidation at high temperatures and generates formic acid and glycolic acid, thereby increasing conductivity. However, the conductivity was increased even in the state of storage at 30 °C. As a result of examining the composition, it was found that formic acid alone was generated. Thus, it can be thought that conductivity was increased because a slight amount of ester of formic acid contained in the ethylene glycol generated formic acid on hydrolysis after mixed with the ion-exchange water.

### [Example 3]

Fig. 6 shows an apparatus of the present invention for collecting, exchanging, and reproducing a coolant composition for a fuel cell in the case of a fuel-cell vehicle. Basically, the apparatus of the present invention for collecting, exchanging, and reproducing a coolant composition includes (1) an exchanging unit and (2) a reproducing unit.

The exchanging unit is provided with a filter 3 for separating ion exchange resin when a coolant is collected from a vehicle. Upon completion of resin collection, when the vehicle is filled with the coolant in which ion exchange resin is dispersed, the coolant is not allowed to pass through the filter 3. The exchanging unit is provided with a filling tank 7 in which reproduced or new ion exchange resin is dispersed.

The reproducing unit is provided with a pure water (separation) tank 4 for separating the ion exchange resin collected from the filter 3 into cation exchange resin and anion exchange resin. Separation is conducted based on difference in specific gravity between the resins. The reproducing unit is provided with tanks 5 and 6 for reproducing the separated resins.

The following problems can be solved with the apparatus of the present invention for collecting, exchanging, and reproducing a coolant composition.
(1) Since ion exchange resin is collected while circulating a coolant, the amount of residual ion exchange resin in the vehicle cooling system is small.
(2) No air bleeding is necessary since air does not flow into the cooling system at the time of exchange.
(3) The fuel cell coolant can be recycled.

An example of a specific procedure of collecting, exchanging, and reproducing a coolant, with the use of the apparatus of the present invention for collecting, exchanging, and reproducing a coolant composition, will be hereafter described.

### 1. Collect ion exchange resin from the coolant in the vehicle.

(1) The coolant inlet and outlet ports of the collecting apparatus are connected to a vehicle.
(2) The flow of liquid is generated in the whole vehicle cooling system.
(3) The filling tank is filled with some amount of ethylene glycol 50% aqueous solution as priming for starting the collecting apparatus.
(4) The pump is activated, and ethylene glycol 50% aqueous solution is caused to flow into the vehicle cooling system through an injection hose, so as to introduce the ion exchange resin in the vehicle to the filter in the apparatus through a return hose.
(5) The coolant introduced into the apparatus is separated into liquid and ion exchange resin by the filter. The apparatus is operated until the coolant is completely separated. The liquid is stored in the filling tank, and the ion exchange resin is stored in the filter.
(6) After the shutdown of the pump, the ion exchange resin alone is washed with pure water, and it is then introduced into a pure water tank from the filter.

### 2. Reproduction of ion exchange resin

(1) After the ion exchange resin is introduced into the pure water tank, the tank is filled with pure water, so as to separate the ion exchange resin depending on the difference in specific gravity between anion exchange resin and cation exchange resin, and each resin is collected in a separate reproducing tank. There is a slight difference in the specific gravity between anion exchange resin and cation exchange resin. When the reproduction is carried out by utilizing such property, the ion exchange resin is separated. Upon separation, the tank should be sufficiently agitated and allowed to stand, so that the ion exchange resin is separated based on the difference in specific gravity.
(2) 1 mol/L of KOH aqueous solution in an amount 10 times that of the anion exchange resin is allowed to flow into the reproducing tank for anion exchange resin at the rate of 1 ml/min.
(3) 1 mol/L of H₂SO₄ aqueous solution in an amount 10 times that of the cation exchange resin is allowed to flow into the reproducing tank for cation exchange resin at the rate of 1 ml/min.
(4) Upon completion of the flow, each resin is sufficiently washed with pure water, and whether the wash water is neutral is determined.
(5) If neutral, the reproduction of the ion exchange resin is terminated.
(6) The pure water is drained from the reproducing tank in the apparatus.

### 3. Filling the cooling system with ion exchange resin

(1) The reproduced ion exchange resin is introduced into the filling tank, and it is then dispersed in ethylene glycol 50% aqueous solution. When the reproduction of the resin is not conducted, a predetermined amount of new ion exchange resin is dispersed in the filling tank.
(2) The circulation circuit of the apparatus is switched to the bypass circuit such that there is no passage through the filter in the apparatus.
(3) The FC coolant containing the reproduced ion exchange resin is caused to flow into the vehicle containing liquid alone through the injection hose by the pump.
(4) Since the ion exchange resin is uniformly dispersed in the cooling system when the FC coolant has circulated between the vehicle cooling system and the apparatus, the pump is terminated.

### INDUSTRIAL APPLICABILITY

When a coolant composition obtained by uniformly dispersing ion exchange resin in a water-based coolant is used for a fuel cell stack, as in the present invention, eluted substance from parts in the cooling system is removed in the initial stages and with the passage of time, whereby insulation properties of the coolant can be stably maintained and a coolant composition for a fuel cell that is safe at high voltage can be obtained. Thus, the present invention is effective in spreading fuel cell vehicles.

## Claims

1. A coolant composition comprising a water-based coolant in which ion exchange resin is uniformly dispersed.

2. The coolant composition according to claim 1, wherein the density of the coolant and that of the ion exchange resin are approximately the same.

3. The coolant composition according to claim 1 or 2, wherein the coolant is mixed with at least one selected from metal powder, metal oxide powder, inorganic oxide powder, and carbide powder used for adjusting density.

4. The coolant composition according to any one of claims 1 to 3, wherein the ion exchange resin has a heat resistance of 80 °C or higher.

5. The coolant composition according to any one of claims 1 to 4, wherein the average particle diameter of the ion exchange resin is 300 µ or less.

6. The coolant composition according to any one of claims 1 to 5, wherein the dispersion amount of the ion exchange resin is 30 vol% or less.

7. The coolant composition according to any one of claims 1 to 6, wherein both anion exchange resin and cation exchange resin are used as the ion exchange resin.

8. The coolant composition according to any one of claims 1 to 7, wherein the water-based coolant comprises water, 0 to 70 wt% of glycol, and 0 to 60 wt% of alcohol.

9. The coolant composition according to any one of claims 1 to 8, wherein the water-based coolant contains nonionic surface active agent.

10. A coolant composition for a fuel cell, wherein the coolant composition according to any one of claims 1 to 9 is used for a fuel cell.

11. A coolant composition for a vehicle-mounted fuel cell, wherein the coolant composition according to any one of claims 1 to 9 is used for a vehicle-mounted fuel cell.

12. A fuel cell cooling system comprising a cooling circuit filled with the coolant composition according to any one of claims 1 to 9.

13. A fuel cell cooling system comprising a cooling circuit filled with the coolant composition according to any one of claims 1 to 9, and an ion exchange resin container as a bypass circuit of the cooling circuit.

14. The fuel cell cooling system according to claim 12 or 13, wherein the cooling circuit is further filled with inert gas.

15. A method for producing a coolant composition by which a water-based coolant is adjusted such that ion exchange resin is dispersed in the coolant.

16. The method for producing a coolant composition according to claim 15, wherein the density of the coolant and that of the ion exchange resin are approximately the same.

17. The method for producing a coolant composition according to claim 16, wherein the coolant is mixed with at least one of metal powder, metal oxide powder, inorganic oxide powder, and carbide powder used for adjusting density.

18. The method for producing a coolant composition according to claim 16 or 17, wherein ion exchange resin having a density approximately the same as that of the coolant is selected.

19. The method for producing a coolant composition according to any one of claims 16 to 18, wherein the water-based coolant comprises water, 0 to 70 wt% of glycol, and 0 to 60 wt% of alcohol.

20. The method for producing a coolant composition according to any one of claims 16 to 19, wherein nonionic surface active agent is added to the water-based coolant.

21. A method for storing a coolant composition, wherein ion exchange resin is allowed to coexist in a water-based coolant.

22. The method for storing a coolant composition according to claim 21, wherein the ion exchange resin is allowed to coexist in the water-based coolant in a state in which the resin is contained in a meshed or fabric package.

23. The method for storing a coolant composition according to claim 21 or 22, wherein the water-based coolant comprises water, 0 to 70 wt% of glycol, and 0 to 60 wt% of alcohol.

24. An apparatus for collecting, exchanging, and reproducing a coolant composition with respect to a fuel cell body, the coolant composition comprising the water-based coolant in which ion exchange resin is dispersed according to any one of claims 1 to 11, the apparatus comprising:
a filter for separating collected coolant into a base and ion exchange resin;
a filling tank for storing the separated base;
a pure water tank for collecting the separated ion exchange resin and separating the collected ion exchange resin into anion exchange resin and cation exchange resin based on difference in specific gravity;
a processing bath for chemically reproducing the separated anion exchange resin and cation exchange resin;
a means of injecting the reproduced ion exchange resin into the filling tank and agitating it therein; and
a pump for filling the fuel cell body with the reproduced coolant composition.

25. The apparatus for collecting, exchanging, and reproducing a coolant composition according to claim 24, wherein the fuel cell body comprises a fuel cell vehicle.
